# EUROPEAN PATENT APPLICATION

(11) **EP 4 556 097 A1**
(43) Date of publication of application: **21.05.2025**
(21) Application number: 22951170.4
(22) Date of filing: 15.07.2022
(51) Int. Cl.: B01D 53/04

(54) **CARBON DIOXIDE CAPTURE SYSTEM**

(71) Applicant: MITSUBISHI ELECTRIC CORPORATION, Chiyoda-ku Tokyo 100-8310 (JP)
(72) Inventor: SHINOKI Toshio, Tokyo 100-8310 (JP); ONAKA Yoji, Tokyo 100-8310 (JP); NAKASHIMA Seiji, Tokyo 100-8310 (JP); KAWAMOTO Makoto, Tokyo 100-8310 (JP); TANISHIMA Makoto, Tokyo 100-8310 (JP)
(74) Representative: Meissner Bolte Partnerschaft mbB
(86) International application number: PCT/JP2022/027794
(87) International publication number: WO 2024/013957

(57) **Abstract**

A carbon dioxide capture system according to the present invention includes a supply route, a carbon dioxide capture portion that has a processing region and a recycling region, an extraction route, a recycle route, a circulation route, and a carbon dioxide separator. The supply route guides air. The processing region causes a sorbent to adsorb carbon dioxide present in the air. The recycle region recycles the sorbent using a recycle fluid. The extraction route guides the air having a reduced concentration of carbon dioxide using the processing region. The recycle route guides the recycle fluid to the recycle region. The circulation route guides a recycle discharge fluid that is discharged by recycling the sorbent using the recycle fluid. The carbon dioxide separator obtains the recycle fluid by separating at least a portion of the carbon dioxide from the recycle discharge fluid.

## Description

### Technical Field

The present invention relates to a carbon dioxide capture system.

### Background Art

Patent Document 1 discloses technology for directly capturing carbon dioxide from air (Direct Air Capture).

### Citation List

### Patent Document

Patent Document 1: Japanese Unexamined Patent Application, First Publication JP 2021- 169079 A

### Summary of the Invention

### Problem to Be Solved by the Invention

In the technology mentioned above, a problem of decreasing efficiency of capturing carbon dioxide exists.

The present invention has been made in order to address the problem above, and an object is to provide a system for capturing carbon dioxide that is capable of increasing capture efficiency of carbon dioxide.

### Means to Solve the Problem

One embodiment of a carbon dioxide capture system according to the present embodiment includes a supply route that guides air, a carbon dioxide capture portion that has a processing region, which causes a sorbent to adsorb carbon dioxide present in the air, and a recycle region that recycles the sorbent using a recycle fluid, an extraction route that guides the air having a reduced concentration of carbon dioxide using the processing region, a recycle route that guides the recycle fluid to the recycle region, a circulation route that guides a recycle discharge fluid that is discharged by recycling the sorbent using the recycle fluid, and a carbon dioxide separator that obtains the recycle fluid by separating at least a portion of the carbon dioxide from the recycle discharge fluid.

### Effects of the Invention

According to the present invention, it is possible to provide a system for capturing carbon dioxide that is capable of increasing capture efficiency of carbon dioxide.

### Brief Description of the Drawings

FIG. 1 A schematic diagram that shows a system for capturing carbon dioxide, according to a first embodiment.
FIG. 2 A schematic diagram that shows a portion of a system for capturing carbon dioxide, according to a second embodiment.
FIG. 3 A schematic diagram that shows a portion of a system for capturing carbon dioxide, according to a third embodiment.
FIG. 4 A schematic diagram that shows a system for capturing carbon dioxide, according to a fourth embodiment.
FIG. 5 A schematic diagram that shows a system for capturing carbon dioxide, according to a fifth embodiment.
FIG. 6 A schematic diagram that shows a system for capturing carbon dioxide, according to a sixth embodiment.
FIG. 7 A schematic diagram that shows a system for capturing carbon dioxide, according to a seventh embodiment.
FIG. 8 A schematic diagram that shows a system for capturing carbon dioxide, according to an eighth embodiment.
FIG. 9 A schematic diagram that shows a system for capturing carbon dioxide, according to a ninth embodiment.
FIG. 10 A schematic diagram that shows a system for capturing carbon dioxide, according to a tenth embodiment.
FIG. 11 A schematic diagram that shows a system for capturing carbon dioxide, according to an eleventh embodiment.
FIG. 12 A schematic diagram that shows a system for capturing carbon dioxide, according to a twelfth embodiment.

### Description of Embodiments

Hereinafter, embodiments of the present invention are explained with reference to the drawings. The scope of the present invention is not limited to the embodiments below, and may be changed so long as the embodiments do not depart from the technical scope of the present invention.

### First Embodiment

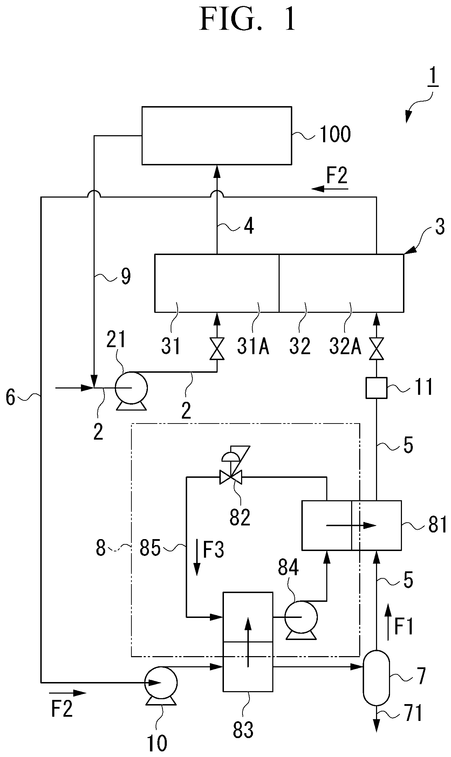

FIG. 1 is a schematic diagram that shows a system for capturing carbon dioxide in a first embodiment.

As shown in FIG. 1, a carbon dioxide capture system 1 includes a supply route 2, a carbon dioxide capture portion 3, an extraction route 4, a recycle route 5, a circulation route 6, a carbon dioxide separator 7, a heat pump unit (heat exchange unit) 8, an introduction route 9, a compressor 10, and a reducer 11.

The supply route 2 is connected to a processing region 31 of the carbon dioxide capture portion 3. The supply route 2 guides fluid such as outside air or the like (fluid to be processed) to the processing region 31. For example, a blower 21 is provided so as to supply air to the processing region 31 in the supply route 2.

The carbon dioxide capture portion 3 includes a first region 31A and a second region 32A. In the example shown in FIG. 1, the first region 31A is the processing region 31. The second region 32A is a recycle region 32. The processing region 31 for example, includes a sorbent, and a receptacle that stores the sorbent. The recycle region 32 for example, includes the sorbent to be recycled, and a receptacle that houses said sorbent.

As an example of the sorbent, amines, silica gel, zeolite, activated carbon, diatomaceous earth, alumina or the like may be mentioned. Specifically, by causing the sorbent to adsorb carbon dioxide that is present in the air, it is possible to separate carbon dioxide from other components. The sorbent may be in granular, or in powder form, or the like. Granular form includes beads (spherical), pellets (cylindrical), or the like. When using powder form sorbent, the sorbent may be carried by surface of a base material. The base material may have a honeycomb shape.

Since at least a portion of carbon dioxide present in the air is removed using adsorption, it is possible to obtain air having a reduced concentration of carbon dioxide in the processing region 31.

The recycle region 32 recycles the sorbent that has adsorbed carbon dioxide at the processing region 31 using the recycle fluid F1. The recycle region 32 has a function of detaching the carbon dioxide from the sorbent. The recycle region 32 for example, has a heating device that heats the sorbent. The heating device separates carbon dioxide from the sorbent by heating the sorbent in the presence of the recycle fluid F1. By separating carbon dioxide from the sorbent, it is possible to recycle the sorbent. The recycle fluid F1 that includes carbon dioxide separated from the sorbent, is discharged from the recycle region 32 as a "recycle discharge fluid F2".

The recycle region 32 may include a pressure reducer of a pressure reduction pump or the like. It is possible to encourage separation of the carbon dioxide from the sorbent by placing the sorbent in a state of reduced pressure.

The extraction route 4 is connected to the processing region 31. The extraction route 4 supplies air that has a reduced concentration of carbon dioxide using the processing region 31, to a living space 100 (space being supplied).

The recycle route 5 is connected to the recycle region 32 of the carbon dioxide capture portion 3, and to the carbon dioxide separator 7. The recycle route 5 guides the recycle fluid F1 from the carbon dioxide separator 7 to the recycle region 32. Nitrogen (N₂), hydrogen (H₂), methane or the like may be mentioned as the recycle fluid F1.

The circulation route 6 is connected to the recycle region 32 of the carbon dioxide capture portion 3, and to the carbon dioxide separator 7. The circulation route 6 guides the recycle discharge fluid F2 that is discharged from the recycle region 32 to the carbon dioxide separator 7.

The carbon dioxide separator 7 separates at least a portion of the carbon dioxide present in the recycle discharge fluid F2, using separation methods such as liquefied separation, membrane separation, sorbent separation or the like. One method, or a combination of two or more methods out of the aforementioned separation methods may be adopted in the carbon dioxide separator 7.

When the carbon dioxide separator 7 uses liquefied separation, for example, a specific component is liquefied and separated from another component (gaseous). Specifically, for example, carbon dioxide at high pressure and low temperature is liquefied and separated from the other component (gas).

When carbon dioxide separator 7 uses membrane separation, for example, a separation membrane that allows small sized atoms of a component to pass through is used to separate a specific component from other components. Specifically for example, a separation membrane where carbon dioxide is selectively allowed to pass through is used. In such separation membrane, carbon dioxide is separated from a liquid that includes a mixture of carbon dioxide and other components (nitrogen, hydrogen, methane or the like).
As examples of membranes used in membrane separation, organic membranes (dendrimer membrane or the like), and non-organic membranes (zeolite membrane, silica membrane, carbon membrane or the like) may be mentioned.

When carbon dioxide separator 7 uses sorbent separation, for example, a sorbent is made to capture a specific component. As a sorbent, amines, silica gel, zeolite, activated carbon, diatomaceous earth, alumina or the like may be mentioned. Specifically, for example, it is possible to separate carbon dioxide from other components by having carbon dioxide be adsorbed by the sorbent.

By having the carbon dioxide be separated, recycle discharge fluid F2, which has a reduced concentration of carbon dioxide, passes through the recycle route 5, and is guided out from the carbon dioxide separator 7 as the "recycle fluid F1".

The heat pump unit 8 includes a heater (first heat exchanger) 81, an expander 82, a cooler (second heat exchanger) 83, a compressor 84, and a circulation route 85.

The heater 81 heats the recycle fluid F1 by exchanging heat with a heat transfer fluid F3.

The expander 82 decreases a pressure of the heat transfer fluid F3.

The cooler 83 cools the recycle discharge fluid F2 by exchanging heat with the heat transfer fluid F3.

The compressor 84 increases the pressure of the heat transfer fluid F3.

The heater 81, the expander 82, the cooler 83, and the compressor 84 are provided on the circulation route 85.

The circulation route 85 is a circular route. The circulation route 85 circulates the heat transfer fluid F3. The heat transfer fluid F3 circulates so as to go through the heater 81, the expander 82, the cooler 83, and the compressor 84 in such order. As the heat transfer fluid F3, carbon dioxide, an alternative fluorocarbon, propane, dimethyl ether or the like may be mentioned.

It is possible to have carbon dioxide used as the heat transfer fluid F3, by applying an appropriate heating temperature (for example, 90 °C to 120 °C) using the heater 81, and an appropriate cooling temperature (for example, -30 °C to -20 °C) using the cooler 83, to the existing heat pump unit 8.

The heat pump unit 8 for example, may configure an air conditioner. The air conditioner may conduct either of a cooling or heating operation using heat absorption or heat release of the heat transfer fluid F3. The heater 81 for example, is installed on either one of an indoor unit, or an outdoor unit. The cooler 83 for example, is installed on either one of the indoor unit or the outdoor unit.

The heat pump unit 8 for example, may configure a refrigeration and freezing device. The refrigeration and freezing device cools using the cooler 83, by using heat absorption of the heat transfer fluid F3.

The introduction route 9 is connected to the supply route 2. The introduction route 9 introduces air of the indoor environment that is discharged from the living space 100 into the supply route 2.

The compressor 10 is provided on the circulation route 6. The compressor 10 increases a pressure of the recycle discharge fluid F2.

The reducer 11 is provided on the recycle route 5. The reducer 11 decreases the pressure of the recycle fluid F1.

A cooler may be provided on a downstream side of the compressor 10 in order to decrease a temperature of the recycle discharge fluid F2, which increases due to the compressor 10 raising the pressure thereof.

Next, an example of a carbon dioxide capture system using the carbon dioxide capture system 1 is explained.

Outside air or the like is guided to the processing region 31 of the carbon dioxide capture portion 3 using the supply route 2. In the processing region 31, by causing the sorbent to adsorb the carbon dioxide that is present in the air, at least a portion of the carbon dioxide is removed. Air having reduced carbon dioxide concentration is guided to the living space (space being supplied) 100 using the extraction route 4.

A process where the carbon dioxide is removed by adsorbing at least a portion thereof is known as an "adsorption step", in the processing region 31.

The adsorbed carbon dioxide that is adsorbed by the sorbent at the processing region 31, is recycled in the recycle region 32. Specifically, in the recycle region 32, the carbon dioxide is separated from the sorbent in the presence of the recycle fluid F1. By separating the carbon dioxide, the sorbent is recycled. The recycle fluid F1 that includes the carbon dioxide separated from the sorbent is discharged as the "recycle discharge fluid F2" from the recycle region 32.

The process of reusing the sorbent in the recycle region 32 is known as a "recycle step".

A switchover from the processing region to the recycle region in the carbon dioxide capture portion 3 is explained.

In the recycle region 32, when reusing the sorbent having carbon dioxide adsorbed at the processing region 31, it is possible to switch over the sorbent between the processing region 31 and the recycle region 32. For example, the sorbent of the processing region 31 along with the receptacle thereof is moved to the recycle region 32, and the sorbent recycled at the recycle region 32 along with the receptacle thereof is moved to the processing region 31. As such, it is possible to switch over between the processing region and the recycle region.

When the sorbent is switched over, it is possible to extract the sorbent of the processing region 31 from the receptacle moving the sorbent to the recycle region 32, along with extracting the sorbent recycled at the recycle region 32 and moving the sorbent to the processing region 31.

By changing routes thereof, it is possible to switch over between the processing region and the recycle region. In FIG. 1, the first region 31A (left portion on FIG. 1) of the carbon dioxide capture portion 3 is the processing region 31. The supply route 2 and the extraction route 4 are connected to the first region 31A. The second region 32A (right portion on FIG. 1) is the recycle region 32. The recycle route 5 and the circulation route 6 are connected to the second region 32A.

The supply route 2 and the extraction route 4 are connected to the second region 32A using valve operations provided on branching routes, which are not shown on the drawings. The recycle route 5 and the circulation route 6 are connected to the first region 31A. With such operation, the first region 31A becomes the recycle region. The second region 32A becomes the processing region. As such, it is possible to switch over between the processing region and the recycle region. Due to valve operations, it is also possible to return the first region 31A back to being the processing region. It is also possible to return the second region 32A back to the recycle region.

The recycle discharge fluid F2 passes through the circulation route 6, and is guided from the recycle region 32. The pressure of the recycle discharge fluid F2 is increased by the compressor 10. The recycle discharge fluid F2 is cooled by exchanging heat with the heat transfer fluid F3 in the cooler 83. For example, it is possible for the cooler 83 to cool down the recycle discharge fluid F2 in the carbon dioxide separator 7, to a temperature of the recycle discharge fluid F2 that corresponds to specifications of the carbon dioxide separator 7, to be mentioned later on.

The recycle discharge fluid F2 is guided to the carbon dioxide separator 7.

The carbon dioxide separator 7 separates at least a portion of the carbon dioxide present in the recycle discharge fluid F2, using separation methods such as liquefied separation, membrane separation, sorbent separation or the like. Condensed carbon dioxide passes through a capture route 71, and is collected.

By having the carbon dioxide be separated, the recycle discharge fluid F2 having a reduced concentration of carbon dioxide passes through the recycle route 5, and is guided from the carbon dioxide separator 7 as the "recycle fluid F1".

The recycle fluid F1 is heated by exchanging heat with the heat transfer fluid F3, at the heater 81. It is possible for the heater 81 for example, to heat the recycle fluid F1 to a temperature between 90 °C and 120 °C of the recycle fluid F1, in the recycle region 32. The pressure of the recycle fluid F1 is reduced as needed, at the reducer 11. The recycle fluid F1 passes through the recycle route 5, and is guided to the recycle region 32.

The heat transfer fluid F3 circulates within the circulation route 85, in the heat pump unit 8. The heat transfer fluid F3 is cooled by exchanging heat with the recycle fluid F1 in the heater 81. The pressure of the heat transfer fluid F3 is reduced at the expander 82. The heat transfer fluid F3 is heated by exchanging heat with the recycle discharge fluid F2 in the cooler 83. The heat transfer fluid F3 heads towards the heater 81 after having a pressure thereof increased by the compressor 84. As such, the heat transfer fluid F3 conducts heating of the recycle fluid F1 and cooling of the recycle discharge fluid F2.

The carbon dioxide capture system 1 includes the circulation route 6 that guides the recycle discharge fluid F2 from the recycle region 32, and the carbon dioxide separator 7 that generates the recycle fluid F1 having a reduced concentration of carbon dioxide from the recycle discharge fluid F2. Since the carbon dioxide capture system 1 circulates the recycle fluid F1, it is possible for the carbon dioxide capture system 1 to increase carbon dioxide capturing efficiency in the carbon dioxide separator 7.

Since the carbon dioxide capture system 1 circulates both the recycle fluid F1 and the recycle discharge fluid F2, it is possible for the carbon dioxide capture system 1 to effectively use heat energy that is held by the recycle fluid F1 and the recycle discharge fluid F2. Therefore, it is possible to increase an energy efficiency of the overall system.

Since the carbon dioxide capture system 1 captures carbon dioxide from the air using the carbon dioxide capture portion 3, and guides the recycle discharge fluid F2 that includes the carbon dioxide to the carbon dioxide separator 7, it is possible for the carbon dioxide capture system 1 to increase the carbon dioxide capturing efficiency.

The carbon dioxide capture system 1 includes the compressor 10, the heater 81, and the cooler 83. By heating the recycle fluid F1 and making a temperature of an inside of the recycle region 32 appropriate, it is possible for the heater 81 to efficiently conduct recycling of the sorbent. By increasing the pressure of the recycle discharge fluid F2, it is possible for the compressor 10 to efficiently conduct separation of the carbon dioxide in the carbon dioxide separator 7. By cooling the recycle discharge fluid F2 and making a temperature of an inside of the carbon dioxide separator 7 appropriate, it is possible for the cooler 83 to efficiently conduct separation of the carbon dioxide.

Since it is possible for the carbon dioxide capture system 1 to achieve downsize of a volume of the recycle discharge fluid F2 using the compressor 10 and the cooler 83, it is possible to downsize equipment thereof.

The heater 81 heats the recycle fluid F1 by exchanging heat with the heat transfer fluid F3. The cooler 83 cools the recycle discharge fluid F2 by exchanging heat with the heat transfer fluid F3. Since the carbon dioxide capture system 1 conducts heat exchange with both the recycle fluid F1 and the recycle discharge fluid F2 via the shared heat transfer fluid F3, it is possible for the carbon dioxide capture system 1 to increase the energy efficiency.

It is possible for the carbon dioxide separator 7 that uses liquefied separation to efficiently separate carbon dioxide. With the carbon dioxide separator 7 that uses liquefied separation, it is possible to downsize equipment thereof, since it is possible to downsize a volume of the captured carbon dioxide by liquefaction.

It is possible for the carbon dioxide separator 7 that uses membrane separation to efficiently separate carbon dioxide. With the carbon dioxide separator 7 that uses membrane separation, compared to other separation methods, there are few constraints on pressure, temperature or the like. As such, it is possible to suppress energy use due to pressurization, depressurization, or the like. Therefore, it is possible to capture carbon dioxide at low cost.

It is possible to have carbon dioxide used as the heat transfer fluid F3, by applying an appropriate heating temperature (for example, 90 °C to 120 °C) by the heater 81, and an appropriate cooling temperature (for example, -30 °C to -20 °C) by the cooler 83, to the existing heat pump unit 8. As such, it is possible to configure a low cost carbon dioxide capture system 1.

The heater 81 and the cooler 83 may at least configure an air conditioner. In such case, since the air conditioner uses the heater 81 and the cooler 83 to construct the carbon dioxide capture system 1, compared to a case where an exclusive heater and cooler are used, it is possible to achieve such construction at low cost.

The heater 81 and the cooler 83 may at least configure a refrigeration and freezing device. In such case, since the refrigeration and freezing device uses the heater 81 and the cooler 83 to construct the carbon dioxide capture system 1, compared to a case where an exclusive heater and cooler are used, it is possible to achieve such construction at low cost.

The heater 81 and the cooler 83 may configure both an air conditioner and a refrigeration and freezing device.

### Second Embodiment

Next, a carbon dioxide capture system according to a second embodiment is explained. Since the carbon dioxide capture system according to the second embodiment is similar to the carbon dioxide capture system of the first embodiment, mainly aspects which differ from the first embodiment are explained. As for configurations that are similar to configurations of the first embodiment, the same reference symbols are affixed thereto, with explanations thereof being omitted.

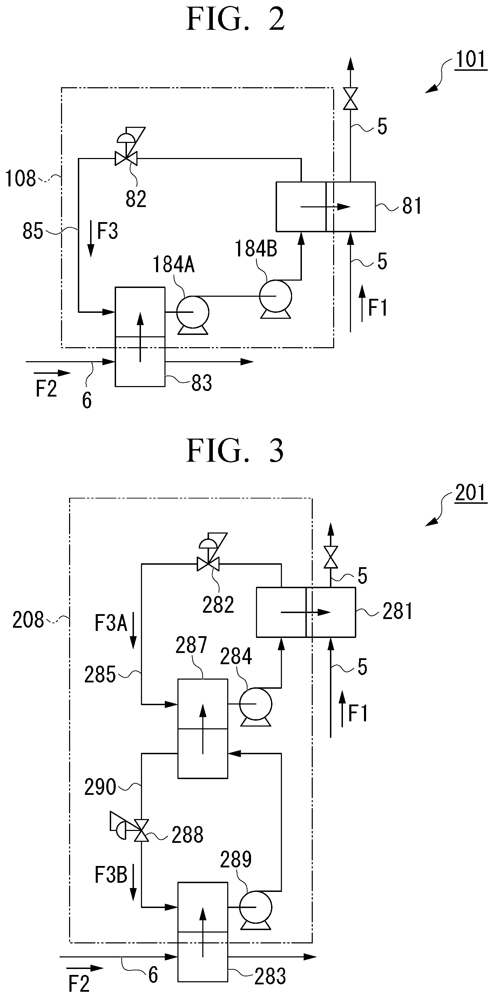

FIG. 2 is a schematic diagram that shows a portion of a system for capturing carbon dioxide, according to the second embodiment.

As shown in FIG. 2, a carbon dioxide capture system 101 includes a heat pump unit 108, in place of the heat pump unit 8 (refer to FIG. 1). The heat pump unit 108 differs from the heat pump unit 8 (refer to FIG. 1) in an aspect of including a plurality of compressors 184A and 184B, in place of the compressor 84 (refer to FIG. 1). The compressors 184A and 184B are provided on the circulation route 85. The compressor 184A is a first compressor 184A. The compressor 184B is a second compressor 184B. The second compressor 184B is on a downstream side flow direction of the heat transfer fluid F3, with respect to the first compressor 184A. The first compressor 184A and the second compressor 184B are disposed in series on the circulation route 85.

It is possible for the carbon dioxide capture system 101 to increase the pressure of the heat transfer fluid F3, since the carbon dioxide capture system 101 has the heat pump unit 108, which includes the plurality of compressors 184A and 184B. As such, it is possible to expand an operational range of heating and cooling at the heat pump unit 108. Thus, it is possible to increase functionality of the carbon dioxide capture system, and it is possible to capture carbon dioxide more efficiently.

In the carbon dioxide capture system 101 shown in FIG. 2, although a number of compressors of the heat pump unit 108 is two, the number of compressors thereof is not limited to two. A plurality (an optional number greater than or equal to two) of compressors may be used.

### Third Embodiment

Next, a carbon dioxide capture system according to a third embodiment is explained. Due to similarities with carbon dioxide capture systems of other embodiments, the same reference symbols are affixed thereto, with explanations thereof being omitted.

FIG. 3 is a schematic diagram that shows a portion of a system for capturing carbon dioxide, according to a third embodiment.

As shown in FIG. 3, a carbon dioxide capture system 201 includes a heat pump unit 208, in place of the heat pump unit 8 (refer to FIG. 1).

The heat pump unit 208 includes a heater (first heat exchanger) 281, a first expander 282, an intermediate heat exchanger 287, a first compressor 284, first circulation route 285, a second expander 288, a cooler (second heat exchanger) 283, a second compressor 289, and a second circulation route 290.

The heater 281 heats the recycle fluid F1 by exchanging heat with a first heat transfer fluid F3A.

The first expander 282 decreases a pressure of the first heat transfer fluid F3A.

The intermediate heat exchanger 287 cools a second heat transfer fluid F3B by exchanging heat with the first heat transfer fluid F3A.

The first compressor 284 increases the pressure of the first heat transfer fluid F3A.

The heater 281, the first expander 282, the intermediate heat exchanger 287, and the first compressor 284 are provided on the first circulation route 285.

The first circulation route 285 is a pathway for circulation. The first circulation route 285 circulates the first heat transfer fluid F3A so as to go through the heater 281, the first expander 282, the intermediate heat exchanger 287, and the first compressor 284 in such order.

The second expander 288 decreases a pressure of the second heat transfer fluid F3B.

The cooler 283 cools the recycle discharge fluid F2 by exchanging heat with the second heat transfer fluid F3B.

The second compressor 289 increases the pressure of the second heat transfer fluid F3B.

The intermediate heat exchanger 287, the second expander 288, the cooler 283, and the second compressor 289 are provided on the second circulation route 290.

The second circulation route 290 is a circulation pathway. The second circulation route 290 circulates the second heat transfer fluid F3B so as to go through the intermediate heat exchanger 287, the second expander 288, the cooler 283, and the second compressor 289 in such order.

The first heat transfer fluid F3A and the second heat transfer fluid F3B have differing physical properties such as boiling points or the like. As the first heat transfer fluid F3A for example, carbon dioxide or the like may be mentioned. As the second heat transfer fluid F3B for example, an alternative fluorocarbon or the like may be mentioned. The second heat transfer fluid F3B is for example operated at a lower temperature, compared to the first transfer fluid F3A.

Out of the heat pump unit 208, a portion (first portion) through which the first heat transfer fluid F3A flows is for example, used to construct a heat pump of a water heater. The first portion for example, includes the heater 281, the first expander 282, the first compressor 284, and the first circulation route 285.

Out of the heat pump unit 208, a portion (second portion) through which the second heat transfer fluid F3B flows is for example, used to construct a heat pump of a refrigeration and freezing device. The second portion for example, includes the second expander 288, the cooler 283, the second compressor 289, and the second circulation route 290.

The intermediate heat exchanger 287 is included in one out of the first portion or the second portion.

The carbon dioxide capture system 201 includes the heater 281, the intermediate heat exchanger 287, the cooler 283, and the heat pump unit 208. Since the first heat transfer fluid F3A and the second heat transfer fluid F3B are used in the heat pump unit 208, it is possible to expand the operational range heating and cooling. Thus, it is possible to increase functionality of the carbon dioxide capture system, and it is possible to capture carbon dioxide more efficiently.

### Fourth Embodiment

Next, a carbon dioxide capture system according to a fourth embodiment is explained. Due to similarities with carbon dioxide capture systems of other embodiments, the same reference symbols are affixed thereto, with explanations thereof being omitted.

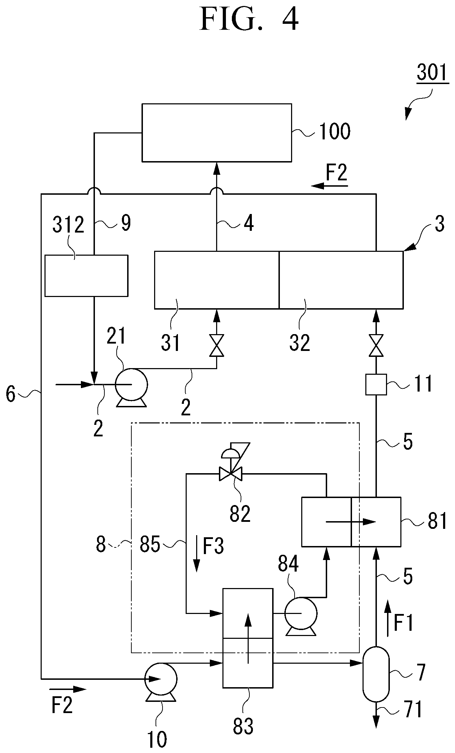

FIG. 4 is a schematic diagram that shows a system for capturing carbon dioxide, according to a fourth embodiment.

As shown in FIG. 4, a carbon dioxide capture system 301 differs from the carbon dioxide capture system 1 (refer to FIG. 1) in an aspect of having an air cleaner 312 provided on the introduction route 9.

The air cleaner 312 for example, cleans out the air by collecting suspended particulate matter of pollen, dust, viruses, mold, germs, house dust, smoke, odors, volatile chemical substances or the like. The air cleaner 312 for example, captures suspended particulate matter using a capturing filter. The air cleaner 312 may include an electric field generator that creates an electric field in between electrodes thereof. The electric field generator kills, or causes pollen, viruses, mold, bacteria or the like to become inactive.

Since the carbon dioxide capture system 301 includes the air cleaner 312, it is possible to have indoor air that is discharged from the living space 100 cleaned and guided to the supply route 2. Thus, it is possible to increase a degree of cleanliness of the air that is supplied to the living space 100. Since air that is supplied to the carbon dioxide capture portion 3 is cleaned, it is possible for the carbon dioxide capture system 301 to increase the carbon dioxide capturing efficiency in the carbon dioxide capture portion 3.

### Fifth Embodiment

Next, a carbon dioxide capture system according to a fifth embodiment is explained. Due to similarities with carbon dioxide capture systems of other embodiments, the same reference symbols are affixed thereto, with explanations thereof being omitted.

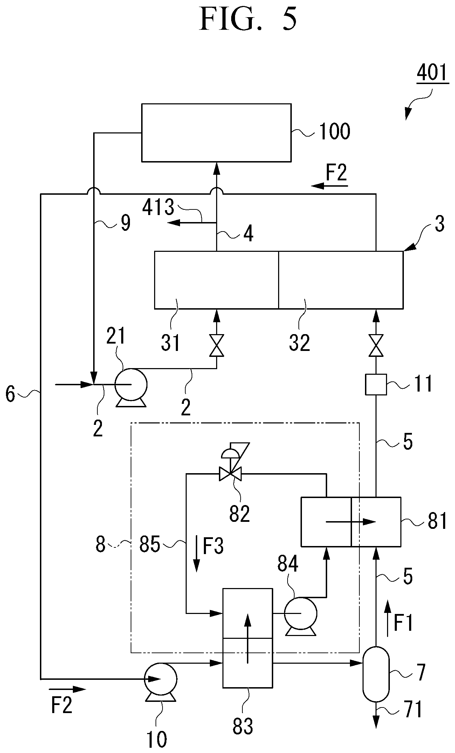

FIG. 5 is a schematic diagram that shows a system for capturing carbon dioxide, according to a fifth embodiment.

As shown in FIG. 5, the carbon dioxide capture system 401 differs from the carbon dioxide capture system 1 (refer to FIG. 1) in an aspect of having an exhaust route 413 connected to the extraction route 4. It is possible for the exhaust route 413 to discharge a portion of the air that flows through the extraction route 4 to the outside. Gas that is discharged from the exhaust route 413 for example, is released to the atmosphere.

By discharging a portion of the air that flows through the extraction route 4 from the exhaust route 413, it is possible for the carbon dioxide capture system 401 to introduce outside air from the supply route 2. By conducting air exchange via discharge and introduction, it is possible to increase the cleanliness of the air of the living space 100. Since the carbon dioxide capture system 401 discharges gas to the atmosphere from the exhaust route 413 after carbon dioxide is captured, it is possible to keep the amount of carbon dioxide being discharged to a minimum. The aforementioned is preferable from a point of view of environmental safety.

### Sixth Embodiment

Next, a carbon dioxide capture system according to a sixth embodiment is explained. Due to similarities with carbon dioxide capture systems of other embodiments, the same reference symbols are affixed thereto, with explanations thereof being omitted.

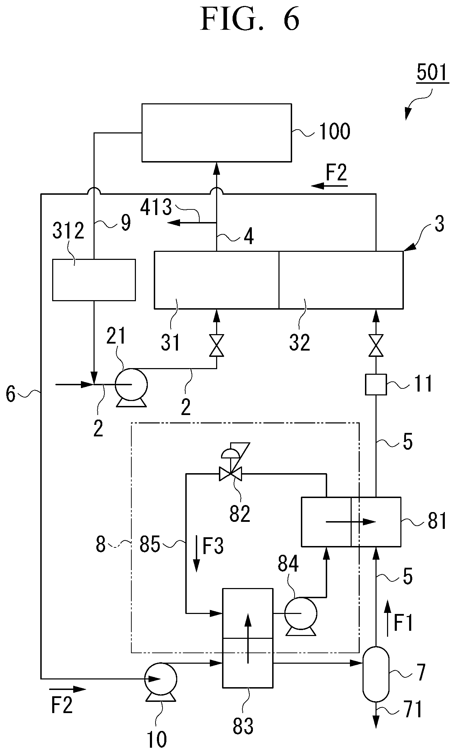

FIG. 6 is a schematic diagram that shows a system for capturing carbon dioxide, according to a sixth embodiment.

As shown in FIG. 6, a carbon dioxide capture system 501 differs from the carbon dioxide capture system 1 (refer to FIG. 1) in an aspect of having the air cleaner 312 provided on the introduction route 9, and of the exhaust route 413 being connected to the extraction route 4.

Since the carbon dioxide capture system 501 includes the air cleaner 312, it is possible to introduce clean air to the supply route 2. Since the carbon dioxide capture system 501 includes the exhaust route 413, it is possible to conduct air exchange. Thus, it is possible to increase the cleanliness of the air of the living space 100. Since the carbon dioxide capture system 501 discharges gas to the atmosphere from the exhaust route 413 after carbon dioxide is captured, it is possible to keep the amount of carbon dioxide being discharged to a minimum. The aforementioned is preferable from a point of view of environmental safety.

### Seventh Embodiment

Next, a carbon dioxide capture system according to a seventh embodiment is explained. Due to similarities with carbon dioxide capture systems of other embodiments, the same reference symbols are affixed thereto, with explanations thereof being omitted.

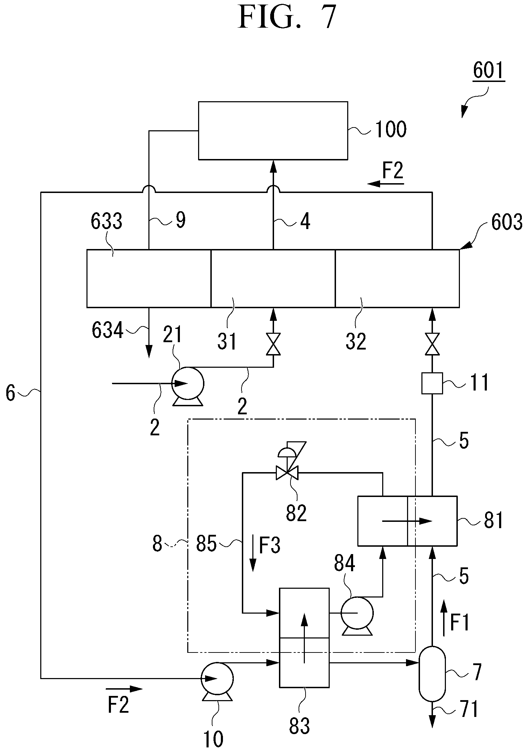

FIG. 7 is a schematic diagram that shows a system for capturing carbon dioxide, according to a seventh embodiment.

As shown in FIG. 7, a carbon dioxide capture system 601 includes a carbon dioxide capture portion 603, in place of the carbon dioxide capture portion 3 (refer to FIG. 1). The carbon dioxide capture portion 603 includes the first processing region 31, a second processing region 633, and the recycle region 32.

The first processing region 31 has the same configuration as the processing region 31 (refer to FIG. 1).

Similar to the first processing region 31, the second processing region 633 also includes a sorbent. The sorbent of the second processing region 633 is the same sorbent as a sorbent of the first processing region 31.

It is possible to recycle sorbents of the first processing region 31 and the second processing region 633 using the recycle step.

The second processing region 633 is connected to the introduction route 9. The introduction route 9 guides the air that is discharged from the living space 100 to the second processing region 633. The second processing region 633 removes at least a portion of the carbon dioxide present in the air using adsorption. Air having a reduced concentration of carbon dioxide is passed through an exhaust route 634, and is discharged to the outside from the second processing region 633.

Since the carbon dioxide capture system 601 has the second processing region 633, it is possible for the carbon dioxide capture system 601 to capture carbon dioxide present in the air that is discharged from the living space 100. Thus, it is possible to increase the carbon dioxide capturing efficiency thereof.

In the carbon dioxide capture system 601, air that is discharged from the living space 100 is not reused, and is discharged to the outside, passing through the exhaust route 634. As such, it is possible to reduce a risk of airborne or droplet infection, or from viruses or the like. It is also possible to increase the cleanliness of the air inside the living space 100. Since the carbon dioxide capture system 601 discharges gas to the atmosphere from the exhaust route 413 after carbon dioxide is captured, it is possible to keep the amount of carbon dioxide being discharged to a minimum. The aforementioned is preferable from a point of view of environmental safety.

### Eighth Embodiment

Next, a carbon dioxide capture system according to an eighth embodiment is explained. Due to similarities with carbon dioxide capture systems of other embodiments, the same reference symbols are affixed thereto, with explanations thereof being omitted.

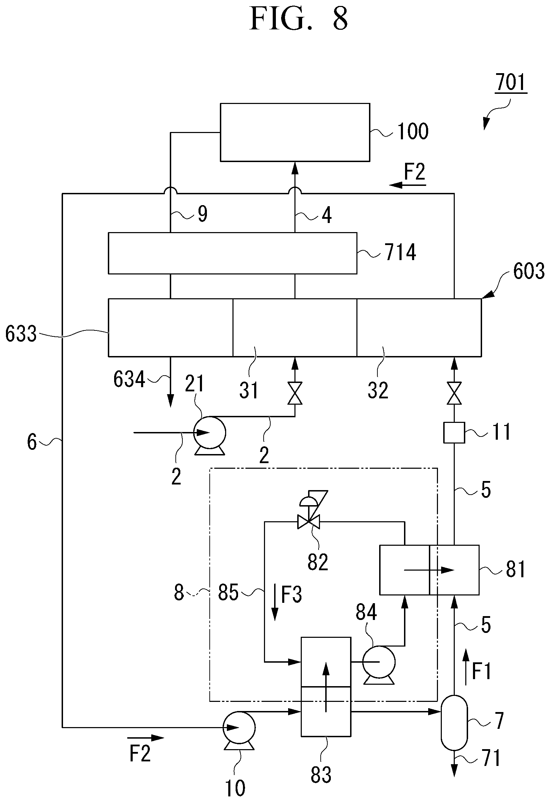

FIG. 8 is a schematic diagram that shows a system for capturing carbon dioxide, according to an eighth embodiment.

As shown in FIG. 8, a carbon dioxide capture system 701 differs from the carbon dioxide capture system 601 (refer to FIG. 7) in an aspect of having a heat exchanger 714 provided. The heat exchanger 714 is provided so as to straddle the extraction route 4 and the introduction route 9. The heat exchanger 714 conducts heat exchange and humidity exchange between the air that is supplied to the living space 100 using the extraction route 4, and the air that is guided from the living space 100 using the introduction route 9. It is possible for the heat exchanger 714 to have the temperature and the humidity of the air being supplied to the living space 100 correspond to an environment inside of the living space 100.

Since the carbon dioxide capture system 701 includes the heat exchanger 714, it is possible for the carbon dioxide capture system 701 to adjust the temperature of the air that passes through the extraction route 4 and is supplied to the living space 100, and to appropriate said temperature and humidity, by exchanging heat with the exhaust air. Thus, it is possible to increase energy efficiency.

It is preferable to adopt either of the liquefied separation or the membrane separation, or to adopt both in the carbon dioxide separator. Hereinafter, examples of a case where a carbon dioxide capture system is configured by adopting liquefied separation, is configured by adopting membrane separation, and a case where the carbon dioxide system is configured by adopting both liquefied separation and membrane separation are shown.

### Ninth Embodiment

Next, a carbon dioxide capture system according to a ninth embodiment is explained. Due to similarities with carbon dioxide capture systems of other embodiments, the same reference symbols are affixed thereto, with explanations thereof being omitted.

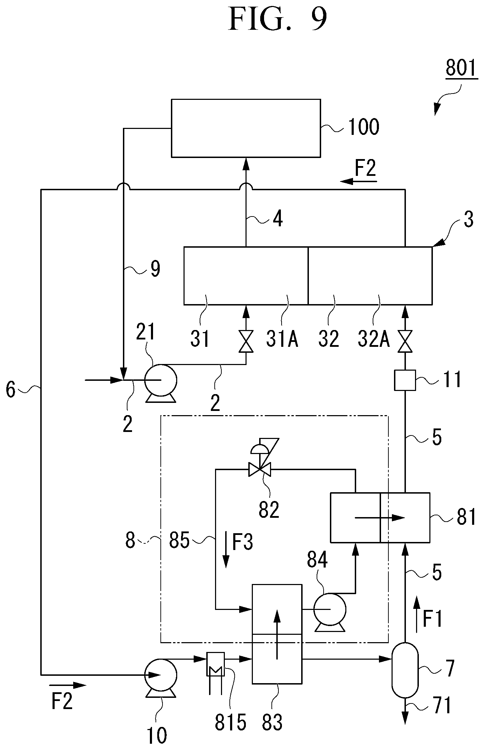

FIG. 9 is a schematic diagram that shows a system for capturing carbon dioxide, according to the ninth embodiment.

As shown in FIG. 9, in a carbon dioxide capture system 801, the carbon dioxide separator 7 is a liquefied separator that separates carbon dioxide using liquefied separation. Since the carbon dioxide separator 7 is a liquefied separator, high pressure and low temperature are required. The recycle discharge fluid F2 is pressurized using the compressor 10. A temperature of the recycle discharge fluid F2 is lowered using the cooler 83. Temperature and pressure conditions for liquefying carbon dioxide are for example, temperatures of -20 °C to -30 °C, and a pressure of 2 MPa.

The carbon dioxide capture system 801 includes a cooler 815. The cooler 815 is provided downstream of the compressor 10 in the circulation route 6. The cooler 815 for example, is provided between the compressor 10 and the cooler 83. The cooler 815 for example, is a water-cooled cooler. The cooler 815 cools the recycle discharge fluid F2 by exchanging heat with the cooler (water). The pressure of the recycle discharge fluid F2 increases due to being pressurized by the compressor 10, and the cooler 815 decreases the temperature of the reuse discharge fluid F2 decreases. Thus, it is possible to decrease the load of the cooler 83.

The carbon dioxide separator 7 liquefies and separates at least a portion of the carbon dioxide that is present in the reuse discharge fluid F2 that passes through the cooler 83. Concentrated carbon dioxide that passes through the capture route 71 is captured.

Since the carbon dioxide capture system 801 uses liquefied separation, it is possible to efficiently conduct separation of the carbon dioxide. Since it is possible to downsize a volume of the carbon dioxide by liquefying, it is possible to downsize a volume of an apparatus of the carbon dioxide capture system 801.

Although the cooler 815 that uses a water-cooled cooling method is explained, a cooling method thereof is not limited thereto. For example, a method of cooling by passing the recycle fluid F1 may be adopted. Accordingly, by having the recycle fluid F1 be heated, it is possible to achieve a system having high thermal efficiency.

### Tenth Embodiment

Next, a carbon dioxide capture system according to a tenth embodiment is explained. Due to similarities with carbon dioxide capture systems of other embodiments, the same reference symbols are affixed thereto, with explanations thereof being omitted.

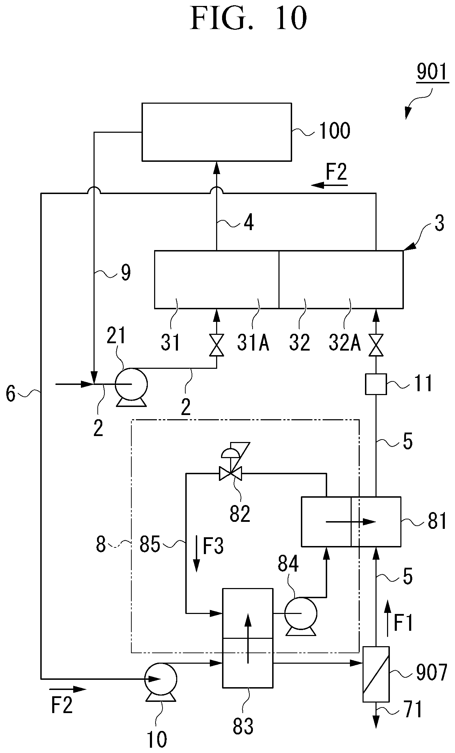

FIG. 10 is a schematic diagram that shows a system for capturing carbon dioxide, according to a tenth embodiment.

As shown in FIG. 10, in a carbon dioxide capture system 901, a carbon dioxide separator 907 is a membrane separator that separates carbon dioxide using membrane separation. The carbon dioxide separator 907 for example, includes a separation membrane that selectively permeates carbon dioxide. The carbon dioxide separator 907 separates at least a portion of the carbon dioxide present in the recycle discharge fluid F2, using the separation membrane. Concentrated carbon dioxide is captured passing through the capture route 71.

Since the carbon dioxide capture system 901 adopts a separation membrane, it is possible to efficiently conduct separation of the carbon dioxide. Compared to cases where other separation methods are adopted, the carbon dioxide capture system 901 has less constraints on pressure and temperature. Therefore, it is possible to suppress the amount of energy used for pressurizing and cooling, making it possible to capture carbon dioxide at low cost.

### Eleventh Embodiment

Next, a carbon dioxide capture system according to an eleventh embodiment is explained. Due to similarities with carbon dioxide capture systems of other embodiments, the same reference symbols are affixed thereto, with explanations thereof being omitted.

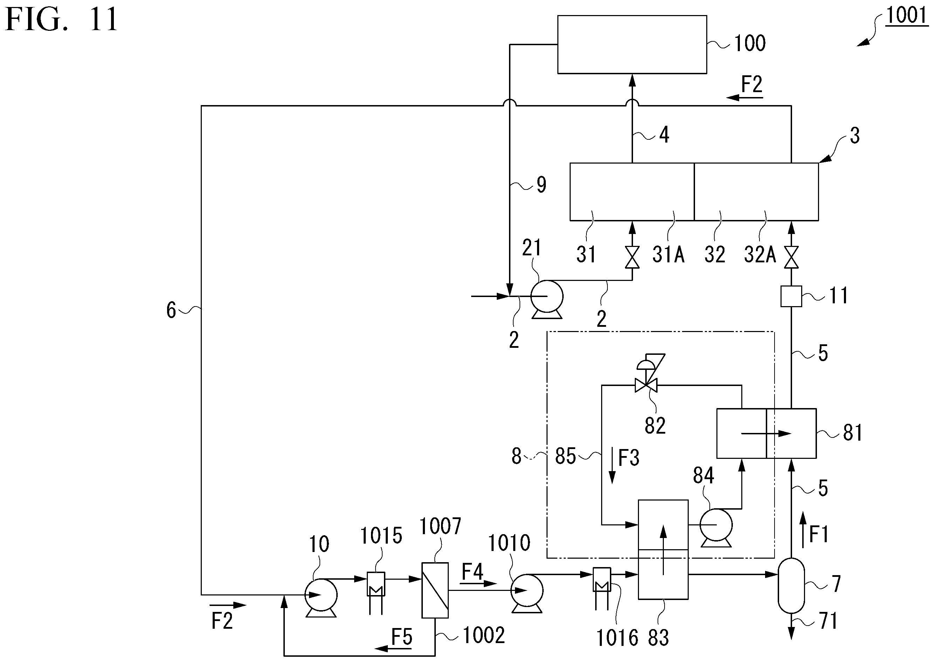

FIG. 11 is a schematic diagram that shows a system for capturing carbon dioxide, according to an eleventh embodiment.

As shown in FIG. 11, in a carbon dioxide capture system 1001, both liquefied separation and membrane separation are adopted as separation methods of carbon dioxide in the carbon dioxide separator.

The carbon dioxide capture system 1001 includes the supply route 2, the carbon dioxide capture portion 3, the extraction route 4, the recycle route 5, the circulation route 6, the heat pump unit 8, the introduction route 9, the first compressor 10, a first cooler 1015, a first carbon dioxide separator 1007, a return route 1002, a second compressor 1010, a second cooler 1016, the second carbon dioxide separator 7, and the reducer 11. The first carbon dioxide separator 1007 and the second carbon dioxide separator 7, are examples of carbon dioxide separators.

The carbon dioxide capture system 1001 differs from the carbon dioxide capture system 1 (refer to FIG. 1) in an aspect of including the first cooler 1015, the first carbon dioxide separator 1007, the return route 1002, the second compressor 1010, and the second cooler 1016.

The first cooler 1015 and the second cooler 1016 for example, is a water-cooled cooler. The first cooler 1015 and the second cooler 1016 cool working fluids thereof by exchanging heat with a refrigerant (water).

The first carbon dioxide separator 1007 is a membrane separator. The first carbon dioxide separator 1007 for example, has a separation membrane that selectively permeates carbon dioxide. The second carbon dioxide separator 7 is a liquefied separator.

The return route 1002 is connected to an exit of a non-permeable side of the first carbon dioxide separator 1007, and to the circulation route 6 (located on an upstream side of the first compressor 10).

The recycle discharge fluid F2 is cooled by the first cooler 1015 and is guided to the first carbon dioxide separator 1007, after having a pressure thereof raised by the compressor 10, in the carbon dioxide capture system 1001. The carbon dioxide present in the recycle discharge fluid F2 is concentrated using the first carbon dioxide separator 1007.
A permeable side fluid F4 that includes the concentrated carbon dioxide heads towards the second compressor 1010.

A non-permeable side fluid F5 that does not permeate through the separation membrane of the first carbon dioxide separator 1007 is returned to the circulation route 6 (located on the upstream side, more than the first compressor 10), using the return route 1002. Accordingly, it is possible to increase the carbon dioxide capturing efficiency in the first carbon dioxide separator 1007.

The permeable side fluid F4 is cooled using the second cooler 1016 and the cooler 83, and is guided to the second carbon dioxide separator 7, after having a pressure thereof increased using the second compressor 1010. The second carbon dioxide separator 7 separates at least a portion of the carbon dioxide present in the permeable side fluid F4. The concentrated carbon dioxide is captured passing through the capture route 71.

It is possible for the carbon dioxide capture system 1001 to increase the carbon dioxide capturing efficiency by adopting both liquefied separation and membrane separation.

Although the first cooler 1015 and the second cooler 1016 are explained as water-cooled coolers, both coolers are not limited to water-cooled coolers, and cooling where the recycle fluid F1 is circulated may be adopted. Accordingly, by heating the recycle fluid F1, it is possible to achieve a more thermal efficient system.

### Twelfth Embodiment

Next, a carbon dioxide capture system according to a twelfth embodiment is explained. Due to similarities with carbon dioxide capture systems of other embodiments, the same reference symbols are affixed thereto, with explanations thereof being omitted.

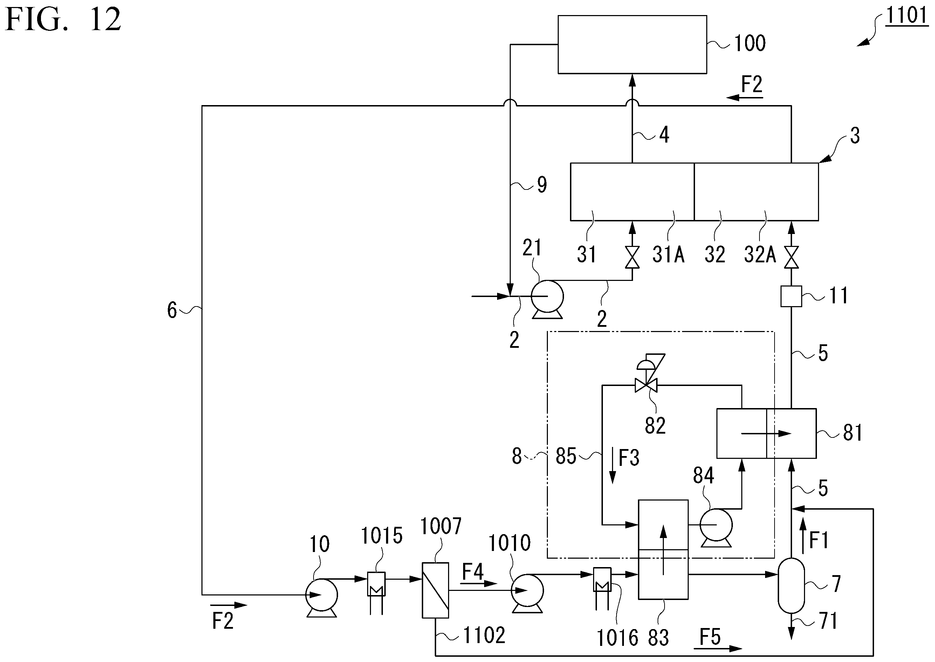

FIG. 12 is a schematic diagram that shows a system for capturing carbon dioxide, according to a twelfth embodiment.

As shown in FIG. 12, a carbon dioxide capture system 1101 differs from the carbon dioxide capture system 1001 (refer to FIG. 11) in an aspect of having a return route 1102 in place of the return route 1002 (refer to FIG. 11).

The return route 1102 is connected to the exit of a non-permeable side of the first carbon dioxide separator 1007, and to the recycle route 5 (located on the upstream side more than the heater 81). The non-permeable side fluid F5 that is guided from the first carbon dioxide separator 1007 is guided to the recycle route 5 using the return route 1102. The non-permeable side fluid F5 is used as a part of the recycle fluid F1.

It is possible for the carbon dioxide capture system 1101 to increase the carbon dioxide capture efficiency by adopting both liquefied separation and membrane separation. Since the carbon dioxide capture system 1101 conducts membrane separation before liquefied separation, it is possible for the system to suppress energy needed for cooling during liquefied separation. Thus, it is possible to capture carbon dioxide at low cost.

In the carbon dioxide capture system 1101, since the non-permeable side fluid F5 having a decreased concentration of carbon dioxide is used as the recycle fluid F1, it is possible to increase the energy efficiency thereof.

The present invention is not limited to the various configurations and various methods explained above, and changes may be added as needed, so long as no conflicts in the technical scope thereof occurs.

For example, one or a plurality of concentrators may be provided on the circulation route 6. A concentrator for example, increases the concentration of carbon dioxide in the recycle discharge fluid F2 by using separation methods such as liquefied separation, membrane separation, sorbent separation or the like.

As such, it is possible to increase the energy efficiency in the carbon dioxide separator 7. The concentrator may be provided on the supply route 2. Although the reducer 11 is provided on the downstream side of the heater 81, the reducer 11 is not limited to such configuration, and may be provided on the upstream side of the heater 81, according to system equipment specifications.

As a heat exchanger, it is possible to use a known heater, cooler, intermediate heat exchanger or the like. As the heat exchanger for example, a multi-tube heat exchanger, a plate heat exchanger, a coil heat exchanger, a double tube heat exchanger, and a spiral heat exchanger or the like may be used.

Although air is mentioned as an example of a fluid to be treated, it is possible to apply other fluids (nitrogen gas, hydrogen gas, oxygen gas, methane or the like) as the fluid to be treated in aforementioned embodiments of the carbon dioxide capture system.

### Reference Sign List

...
- 1, 101, 201, 301, 401, 501, 601: Carbon Dioxide Capture System
- 701, 801, 901, 1001, 1101: Carbon Dioxide Capture System
- 2: Supply Route
- 3: Carbon Dioxide Capture portion
- 4: Extraction Route
- 5: Recycle Route
- 6: Circulation Route
- 7, 907: Carbon Dioxide Separator
- 9: Introduction Route
- 10: Compressor
- 31: Processing Region
- 32: Recycle Region
- 81, 281: Heater
- 83, 283: Cooler
- 84: Compressor
- 184A: First Compressor (Compressor)
- 184B: Second Compressor (Compressor)
- 287: Intermediate Heat Exchanger
- 413: Exhaust Route
- 1007: First Carbon Dioxide Separator (Carbon Dioxide Separator)
- F1: Recycle Fluid
- F2: Recycle Discharge Fluid

## Claims

1. A carbon dioxide capture system comprising:
- a supply route that guides air;
- a carbon dioxide capture portion that has a processing region, which causes a sorbent to adsorb carbon dioxide present in the air, and a recycle region that recycles the sorbent using a recycle fluid;
- an extraction route that guides the air having a reduced concentration of carbon dioxide using the processing region;
- a recycle route that guides the recycle fluid to the recycle region;
- a circulation route that guides a recycle discharge fluid that is discharged by recycling the sorbent using the recycle fluid; and
- a carbon dioxide separator that obtains the recycle fluid by separating at least a portion of the carbon dioxide from the recycle discharge fluid.

2. A carbon dioxide capture system according to claim 1 further comprising:
a heater that heats the recycle fluid;
a cooler that cools the recycle discharge fluid; and
a compressor that increases a pressure of the recycle discharge fluid.

3. The carbon dioxide capture system according to claim 2,
wherein the heater heats the recycle fluid by exchanging heat with a heat transfer fluid, and
the cooler cools the recycle discharge fluid by exchanging heat with the heat transfer fluid.

4. The carbon dioxide capture system according to claim 2 further comprising:
an intermediate heat exchanger, wherein
the heater heats the recycle fluid by exchanging heat with a first heat transfer fluid, and
the intermediate heat exchanger cools a second heat transfer fluid by exchanging heat with the first heat transfer fluid, and
the cooler cools the recycle discharge fluid by exchanging heat with the second heat transfer fluid.

5. The carbon dioxide capture system according to any one of claims 1 to 4,
wherein the carbon dioxide separator separates the carbon dioxide present in the recycle discharge fluid using liquefied separation.

6. The carbon dioxide capture system according to any one of claims 1 to 4,
wherein the carbon dioxide separator separates the carbon dioxide present in the recycle discharge fluid using membrane separation.

7. The carbon dioxide capture system according to claim 3,
wherein the heat transfer fluid is carbon dioxide.

8. The carbon dioxide capture system according to claim 3,
wherein the heater and the cooler at least configure an air conditioner.

9. The carbon dioxide capture system according to claim 3,
wherein the heater and the cooler at least configure a refrigeration and freezing device.

10. The carbon dioxide capture system according to any one of claims 1 to 9,
wherein an exhaust route that discharges a portion of the air that flows through the extraction route to an outside, is connected to the extraction route.
